# EUROPEAN PATENT APPLICATION

(11) **EP 4 270 538 A1**
(43) Date of publication of application: **01.11.2023**
(21) Application number: 20967314.4
(22) Date of filing: 28.12.2020
(51) Int. Cl.: H01M 4/36, H01M 4/48

(54) **NEGATIVE ELECTRODE MATERIAL, ELECTROCHEMICAL DEVICE, AND ELECTRONIC APPARATUS**

(71) Applicant: Ningde Amperex Technology Limited, Ningde, Fujian 352100 (CN)
(72) Inventor: YI, Ting, Ningde, Fujian 352100 (CN)
(74) Representative: Icosa
(86) International application number: PCT/CN2020/140340
(87) International publication number: WO 2022/140962

(57) **Abstract**

This application provides a negative electrode material, an electrochemical apparatus, and an electronic apparatus. The negative electrode material provided in some embodiments of this application includes: a silicon-based material; or a silicon-based material and graphite; where the silicon-based material includes a silicon-oxygen compound, carbon nanotubes, and a titanium oxide layer, the carbon nanotubes and the titanium oxide layer being located on surface of the silicon-oxygen compound, and at least some of the carbon nanotubes running through the titanium oxide layer. In the negative electrode material provided in some embodiments of this application, TiO₂ that features low swelling rate, high mechanical stability, and good lithium ion transmission performance is applied onto the surface of the silicon-oxygen compound, and carbon nanotubes are provided on the surface of the silicon-oxygen compound, further improving electrical conductivity of the negative electrode material. Through bonding between Ti-OH and Si-O, the carbon nanotubes are more stably bound to the surface of the silicon-oxygen compound, to continuously deliver long-range electrical conductivity during cycling, thereby improving cycling performance and rate performance while reducing swelling.

## Description

### TECHNICAL FIELD

This application relates to the technical field of electrochemistry, and in particular, to a negative electrode material, an electrochemical apparatus, and an electronic device.

### BACKGROUND

With the development and advancement of electrochemical apparatuses (for example, lithium-ion batteries), increasingly high requirements are imposed on their cycling performance and rate performance. Although current technologies for improving electrochemical apparatuses can enhance cycling performance and rate performance of the electrochemical apparatuses to some extent, these technologies are still unsatisfactory and are expected to be further improved.

### SUMMARY

Some embodiments of this application provide a negative electrode material. The negative electrode material includes: a silicon-based material; or a silicon-based material and graphite, where the silicon-based material includes a silicon-oxygen compound, carbon nanotubes, and a titanium oxide layer, the carbon nanotubes and the titanium oxide layer being located on surface of the silicon-oxygen compound, and at least some of the carbon nanotubes running through the titanium oxide layer.

In some embodiments, mass of the carbon nanotubes is m1, mass of the silicon-oxygen compound is m2, and r1 = m1/m2, r1 being 0.05% to 1%. In some embodiments, mass of element titanium in the titanium oxide layer is m3, mass of the silicon-oxygen compound is m2, and r2 = m3/m2, r2 being 1% to 3%. In some embodiments, Dᵥ50 of the silicon-based material is 3 µm to 10 µm. In some embodiments, the silicon-based material has a specific surface area of 1.0 m²/g to 10 m2/g.

In some embodiments, the silicon-oxygen compound includes SiOₓ, where 0.5 < x < 1.6. SiOₓ includes at least one of a crystalline state or an amorphous state. In some embodiments, the titanium oxide layer includes an accumulation structure formed by accumulation of spherical particles, where the spherical particle has a diameter of 1 nm to 5 nm. In some embodiments, the negative electrode material has a conductivity of 2.0 S/cm to 30 S/cm. In some embodiments, the graphite includes at least one of natural graphite, artificial graphite, or meso-carbon microbeads.

Some other embodiments of this application provide an electrochemical apparatus. The electrochemical apparatus includes a positive electrode plate, a negative electrode plate, and a separator disposed between the positive electrode plate and the negative electrode plate, where the negative electrode plate includes a negative electrode current collector and a negative electrode active substance layer disposed on the negative electrode current collector, the negative electrode active substance layer including the negative electrode material according to any one of the foregoing embodiments.

In some embodiments, the electrochemical apparatus further includes an electrolyte, where the electrolyte contains fluoroethylene carbonate (FEC), and based on a total mass of the electrolyte, a mass percentage of fluoroethylene carbonate is 4% to 25%. In some embodiments, the electrolyte includes an organic solvent and a lithium salt, where the organic solvent includes at least one of fluoroethylene carbonate, ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂ (LiBOB), or lithium difluoro(oxalato)borate LiBF₂(C₂O₄) (LiDFOB).

In some embodiments, the organic solvent includes fluoroethylene carbonate (FEC), ethylene carbonate (EC), dimethyl carbonate (DMC), and diethyl carbonate (DEC), where ethylene carbonate (EC) accounts for 4% to 35% of volume of the organic solvent, a volume ratio of ethylene carbonate (EC), dimethyl carbonate (DMC), and diethyl carbonate (DEC) is (0.1 to 1):1:1, and mass of fluoroethylene carbonate (FEC) accounts for 10% of total mass of the electrolyte. The lithium salt includes lithium hexafluorophosphate (LiPF₆), where a concentration of lithium hexafluorophosphate (LiPF₆) in the electrolyte is 1 mol/L. Some other embodiments of this application further provide an electronic apparatus including the electrochemical apparatus according to any one of the foregoing embodiments.

The negative electrode material provided in some embodiments of this application includes: a silicon-based material; or a silicon-based material and graphite; where the silicon-based material includes a silicon-oxygen compound, carbon nanotubes, and a titanium oxide layer, the carbon nanotubes and the titanium oxide layer being located on surface of the silicon-oxygen compound, and at least some of the carbon nanotubes running through the titanium oxide layer. In the negative electrode material provided in some embodiments of this application, TiO₂ that features low swelling rate, high mechanical stability, and good lithium ion transmission performance is applied onto the surface of the silicon-oxygen compound, and carbon nanotubes are provided on the surface of the silicon-oxygen compound, further improving electrical conductivity of the negative electrode material. Through bonding between Ti-O-Si, the carbon nanotubes are more stably bound to the surface of the silicon-oxygen compound, to continuously deliver long-range electrical conductivity during cycling, thereby improving cycling performance and rate performance while reducing swelling.

### BRIEF DESCRIPTION OF DRAWINGS

With reference to the accompanying drawings and specific embodiments below, the above and other features, advantages, and aspects of some embodiments of this application will become more apparent. Throughout the drawings, the same or similar reference numbers indicate same or similar elements. It should be understood that the drawings are illustrative and that the components and elements are not necessarily drawn to scale.
FIG. 1 is a schematic diagram of a silicon-based material according to some embodiments of this application.
FIG. 2 is a schematic diagram of an electrochemical apparatus according to some embodiments of this application.

### DESCRIPTION OF EMBODIMENTS

The following describes some embodiments of this application in more detail with reference to the accompanying drawings. Although some embodiments of this application are illustrated in the accompanying drawings, it should be understood that this application may be implemented in various forms and should not be construed as being limited to these embodiments described herein. On the contrary, these embodiments are provided for a more thorough and complete understanding of this application. It should be understood that the accompanying drawings and some embodiments of this application are for illustrative purposes only, and are not intended to limit the scope of protection of this application.

A specific capacity of a silicon-based material is much higher than that of a carbon material. Therefore, more and more electrochemical apparatuses use the silicon-based material as a negative electrode material. However, there are still some problems with the silicon-based material as the negative electrode material. During cycling, a significant volume change of the silicon-based material causes the silicon-based material to be pulverized and separated from a negative electrode current collector, thereby degrading cycling performance and rate performance of the electrochemical apparatus.

Some embodiments of this application provide a negative electrode material. The negative electrode material can be used in an electrochemical apparatus. The negative electrode material includes a silicon-based material, or includes a silicon-based material and graphite. The negative electrode material includes the silicon-based material, thus helping increase specific capacity of the negative electrode material.

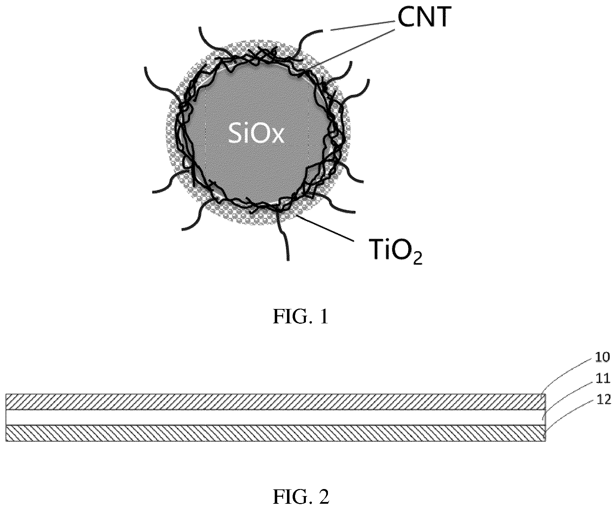

The silicon-based material includes a silicon-oxygen compound, carbon nanotubes (CNT), and a titanium oxide layer, where the carbon nanotubes and the titanium oxide layer are located on surface of the silicon-oxygen compound, and at least some of the carbon nanotubes run through the titanium oxide layer. FIG. 1 is a schematic diagram of a silicon-based material. For a structure of a silicon-based material according to some embodiments, reference may be made to FIG. 1.

In some embodiments, the carbon nanotubes have good electrical conductivity and the carbon nanotubes on the surface of the silicon-oxygen compound run through the titanium oxide layer, so that the silicon-oxygen compound inside can conduct electricity with the negative electrode material outside via the carbon nanotubes. This can significantly improve the electrical conductivity of the negative electrode material, thereby helping improve the cycling capacity retention rate and rate performance. The silicon-oxygen compound in the negative electrode material undergoes volume swelling during cycling. Titanium oxide has good mechanical properties, so the titanium oxide layer being provided on the surface of the silicon-oxygen compound can decrease the volume swelling rate of the silicon-oxygen compound during cycling. In addition, the titanium oxide layer may form Ti-O-Si bonds with the silicon-oxygen compound, and the Ti-O-Si bonds can improve adhesion of the carbon nanotubes to the surface of the silicon-oxygen compound, thereby ensuring electrical conductivity of the negative electrode material during long-term cycling. The negative electrode material provided in some embodiments of this application can increase cycling capacity retention rate, improve rate performance, and reduce volume swelling during cycling.

In some embodiments, mass of the carbon nanotubes is m1, mass of the silicon-oxygen compound is m2, and r1 = m1/m2, r1 being 0.05% to 1%. In some embodiments, when r1 is excessively small, the carbon nanotubes may not improve electrical conductivity of the negative electrode material obviously; and when r1 is excessively large, a dispersing agent usually needs to be used for the carbon nanotubes to attach to the surface of the silicon-oxygen compound, so an excessively large quantity of carbon nanotubes may cause more dispersing agents to be attached on the surface of the silicon-oxygen compound, limiting ion transmission.

In some embodiments, mass of element titanium in the titanium oxide layer is m3, mass of the silicon-oxygen compound is m2, and r2 = m3/m2, r2 being 1% to 3%. In some embodiments, when r2 is excessively small, the inhibition effect on the volume swelling of the silicon-oxygen compound may be not obvious due to the low content of the titanium oxide layer; and when r2 is excessively large, the titanium oxide layer may become thicker due to the excessively high content of the titanium oxide layer, which leads to reduced electrical conductivity of the negative electrode material and is unfavorable for increasing volumetric energy density.

In some embodiments, Dᵥ50 of the silicon-based material is 3 µm to 10 µm. In some embodiments, when Dᵥ50 of the silicon-based material is excessively small, the silicon-oxygen compound has few attachment points, making it difficult for the carbon nanotubes and the titanium oxide layer to attach to; and when Dᵥ50 of the silicon-based material is excessively large, it may be unfavorable for improving rate performance.

In some embodiments, the silicon-based material has a specific surface area of 1.0 m²/g to 10 m²/g. In some embodiments, when the specific surface area of the silicon-based material is excessively small, it may cause poor rate performance; and when the specific surface area of the silicon-based material is excessively large, it may increase electrolyte consumption and be not conducive to cycling performance.

In some embodiments, the silicon-oxygen compound includes SiOₓ, where 0.5 < x < 1.6. SiOₓ includes at least one of a crystalline state or an amorphous state. In some embodiments, when x is excessively large, SiOₓ generates more irreversible phases Li₂O and Li₄SiO₄ during cycling of the electrochemical apparatus, which may result in decreased specific energy and initial coulombic efficiency; and when x is excessively small, it may result in degraded cycling performance of SiOₓ.

In some embodiments, the titanium oxide layer includes an accumulation structure formed by accumulation of spherical particles, where the spherical particle has a diameter of 1 nm to 5 nm. In some embodiments, the accumulation structure is formed by accumulation of the spherical particles, so the titanium oxide layer has some space, which allows the carbon nanotubes to run through the titanium oxide layer while suppressing swelling of the silicon-oxygen compound, and allows ions to pass through the titanium oxide layer, thereby improving the electrical conductivity of the negative electrode material.

In some embodiments, the negative electrode material has a conductivity of 2.0 S/cm to 30 S/cm. In some embodiments, an excessively low conductivity of the negative electrode material is not conducive to cycling performance and rate performance. In some embodiments, the graphite includes at least one of natural graphite, artificial graphite, or meso-carbon microbeads.

Some other embodiments of this application provide an electrochemical apparatus. As shown in FIG. 2, the electrochemical apparatus includes a positive electrode plate 10, a negative electrode plate 12, and a separator 11 disposed between the positive electrode plate 10 and the negative electrode plate 12, where the negative electrode plate 12 includes a negative electrode current collector and a negative electrode active substance layer disposed on the negative electrode current collector, the negative electrode active substance layer including the negative electrode material according to any one of the foregoing embodiments.

In some embodiments, the electrochemical apparatus further includes an electrolyte, where the electrolyte contains fluoroethylene carbonate, and based on a total mass of the electrolyte, a mass percentage of fluoroethylene carbonate is 4% to 25%. In some embodiments of this application, FEC can improve mechanical properties of an SEI film, thereby decreasing the cycling swelling rate and increasing the cycling capacity retention rate of the electrochemical apparatus. When the amount of FEC is excessively small, an improvement effect may be limited. When the amount of FEC is excessively large, SEI films may be continuously generated, thereby increasing impedance of the electrochemical apparatus and decreasing the cycling capacity retention rate. In some embodiments, the addition of FEC can significantly increase the cycling capacity retention rate and decrease the cycling swelling rate of the electrochemical apparatus using a silicon-based material.

In some embodiments of this application, the electrolyte includes an organic solvent and a lithium salt, where the organic solvent includes at least one of ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂ (LiBOB), or lithium difluoro(oxalato)borate LiBF₂(C₂O₄) (LiDFOB).

In some embodiments, ethylene carbonate (EC) accounts for 4% to 35% of volume of the organic solvent. Ethylene carbonate (EC) has a high dielectric constant, and its main decomposition product is ROCO₂Li, which can form an effective, dense, and stable SEI (solid electrolyte interface) film on the surface of the negative electrode material. When the percentage by volume of EC in the organic solvent is within a range of 4% to 35%, the capacity retention rate and low-temperature performance of the electrochemical apparatus can be significantly improved. In some embodiments, when the percentage by volume of EC in the organic solvent is higher than 35%, due to a large viscosity of EC, the large amount of EC leads to an increase in viscosity of the electrolyte and a degradation in low-temperature performance.

In some embodiments, the organic solvent includes fluoroethylene carbonate (FEC), ethylene carbonate (EC), dimethyl carbonate (DMC), and diethyl carbonate (DEC), where a volume ratio of ethylene carbonate (EC), dimethyl carbonate (DMC), and diethyl carbonate (DEC) is (0.1 to 1):1:1, and mass of fluoroethylene carbonate (FEC) accounts for 10% of total mass of the electrolyte. The lithium salt includes lithium hexafluorophosphate (LiPF₆), where a concentration of lithium hexafluorophosphate (LiPF₆) in the electrolyte is 1 mol/L. In some embodiments, the volume ratio of EC, DMC, and DEC, the mass percentage of FEC in the electrolyte, and the concentration of LiPF₆ are controlled within the above ranges, which helps enhance the cycling capacity retention rate and rate performance of the electrochemical apparatus and decrease the cycling swelling rate of the electrochemical apparatus.

In some embodiments, the negative electrode active substance layer may further include a conductive agent. The conductive agent in the negative electrode active substance layer may include at least one of carbon black, acetylene black, Ketjen black, lamellar graphite, graphene, carbon nanotubes, carbon fibers, or carbon nanowires. It should be understood that the materials disclosed above are merely examples, and any other suitable material may be used for the negative electrode active material layer. In some embodiments, a mass ratio of the negative electrode material, conductive agent and binder in the negative electrode active substance layer may be (80 to 99):(0.5 to 10):(0.5 to 10). It should be understood that this is merely an example and is not intended to limit this application.

In some embodiments, the positive electrode plate 10 includes a positive electrode current collector and a positive electrode active substance layer disposed on the positive electrode current collector. The positive electrode active substance layer may be located on one side or two sides of the positive electrode current collector. In some embodiments, the positive electrode current collector may be aluminum foil. Certainly, other positive electrode current collectors commonly used in the art may also be used. In some embodiments, a thickness of the positive electrode current collector may be 1 µm to 200 µm. In some embodiments, the positive electrode active substance layer may be applied onto only part of the positive electrode current collector. In some embodiments, a thickness of the positive electrode active substance layer may be 10 µm to 500 µm. It should be understood that this is merely an example, and any other suitable thickness may be adopted.

In some embodiments, the positive electrode active substance layer includes a positive electrode material. In some embodiments, the positive electrode material may include at least one of lithium cobaltate, lithium manganate, lithium iron phosphate, lithium iron manganese phosphate, lithium nickel cobalt manganate, lithium nickel cobalt aluminate, or lithium nickel manganate, and the positive electrode material may undergo doping and/or coating processing. In some embodiments, the positive electrode active substance layer further includes a binder and a conductive agent. In some embodiments, the binder in the positive electrode active material layer may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylate ester, polyacrylic acid, polyacrylate salt, carboxyl methyl cellulose, polyvinyl acetate, polyvinylpyrrolidone, polyvinyl ether, polymethyl methacrylate, polytetrafluoroethylene, or polyhexafluoropropylene. In some embodiments, the conductive agent in the positive electrode active substance layer may include at least one of conductive carbon black, acetylene black, Ketjen black, lamellar graphite, graphene, carbon nanotubes, or carbon fibers. In some embodiments, in the positive electrode active substance layer, a mass ratio of the positive electrode material, the conductive agent and the binder may be (70 to 98):(1 to 15):(1 to 15). It should be understood that the descriptions above are merely examples, and any other suitable materials, thicknesses, and mass ratios may be used for the positive electrode active substance layer.

In some embodiments, the separator 11 includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, a thickness of the separator is in a range from about 3 µm to 500 µm.

In some embodiments, a surface of the separator may further include a porous layer. The porous layer is disposed on at least one surface of the separator. The porous layer includes at least one of inorganic particles or a binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, pores of the separator have a diameter ranging from about 0.01 µm to 1 µm. The binder in the porous layer is selected from at least one of polyvinylidene fluoride, a vinylidene fluoride-hexafluoropropylene copolymer, polyamide, polyacrylonitrile, polyacrylate ester, polyacrylic acid, polyacrylate salt, carboxyl methyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly or a stacked electrode assembly. In some embodiments, the electrochemical apparatus is a lithium-ion battery, but this application is not limited thereto. In some embodiments of this application, a lithium-ion battery is used as an example, where a positive electrode plate, a separator, and a negative electrode plate are wound or stacked in sequence to form an electrode assembly, and the electrode assembly is then put into, for example, an aluminum-plastic film housing for packaging, followed by electrolyte injection, formation, and packaging, to prepare a lithium-ion battery. Then, a performance test is performed on the prepared lithium-ion battery. Persons skilled in the art will understand that the method for preparing the electrochemical apparatus (for example, the lithium-ion battery) described above is only an embodiment. Without departing from the content disclosed in this application, other methods commonly used in the art may be used.

Some embodiments of this application further provide an electronic apparatus including the foregoing electrochemical apparatus. The electronic apparatus in some embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

Some embodiments of this application further provide a preparation method of electrochemical apparatus. The method includes the following steps.

### Preparation of negative electrode material

Step 1: Silicon-based powder and a carbon nanotube slurry are added into an MSK-SFM-10 vacuum stirrer at a specified ratio and then stirred for 180 min at a revolution speed of 10 r/min to 40 r/min to obtain a slurry.

Step 2: The slurry obtained in step 1 is transferred to a centrifugal rotary disc nozzle of a spray drying granulator, and spray drying is performed at a centrifugal rotation speed of 5000 r/min to obtain powder, where the spray drying granulator has an inlet temperature of 260°C and an outlet temperature of 105°C.

Step 3: The powder obtained in step 2 is sieved using a sieve of 1000 meshes to 8000 meshes.

Step 4: The powder sieved in step 3 is added into an ethanol solution, then a titanium dioxide precursor (for example, isopropyl titanate, tetrabutyl titanate, or ethyl titanate) is added into the ethanol solution, a specified amount of water is added, and the mixture is stirred for 30 min, followed by filtering and washing with ethanol solution, to obtain powder.

Step 5: The powder obtained in step 4 is roasted in an inert atmosphere (Ar or N₂) with a controlled temperature rise rate of 5°C/min, and maintained at 400°C to 800°C for 2 h. Then, the obtained powder is graded and sieved to obtain a negative electrode material.

### Preparation of negative electrode plate

2.8 kg of the negative electrode material and 35 g of a conductive agent are added into an MSK-SFM-10 vacuum stirrer and then stirred for 40 min at a revolution speed of 10 r/min to 30 r/min to obtain a mixture, where the conductive agent includes one or more of conductive carbon black, acetylene black, Ketjen black, conductive graphite, or graphene; and graphite includes at least one of natural graphite, artificial graphite, or meso-carbon microbeads.

Then, 95 g of a binder is added into the mixture and stirred for 60 min, deionized water is added, and then stirring is performed for 120 min at a revolution speed of 10 r/min to 30 r/min and a rotation speed of 1000 r/min to 1500 r/min, to obtain a mixed slurry, where the mixed slurry has a viscosity controlled between 1500 mPa.s and 6000 mPa.s and a solid percentage controlled between 35% and 50%.

The mixed slurry is filtered with a 170-mesh double-layer sieve to obtain a negative electrode slurry.

Then, the negative electrode slurry is applied onto a copper foil with a coating thickness of 50 µm to 200 µm; and after drying and cold pressing, a negative electrode plate is obtained, with a double-sided compacted density of 1.5 g/cm³ to 2.0 g/cm³.

### Preparation of positive electrode plate

A positive electrode material LiCoO₂, conductive carbon black, and polyvinylidene fluoride (PVDF) are fully stirred and mixed to uniformity in an N-methylpyrrolidone solvent at a weight ratio of 96.7:1.7:1.6, and the resulting mixture is applied onto an Al foil, followed by drying and cold pressing to obtain a positive electrode plate.

### Preparation of lithium-ion battery

A polyethylene porous polymeric film is used as a separator; the positive electrode plate, the separator, and the negative electrode plate are stacked in sequence, so that the separator is located between the positive electrode plate and the negative electrode plate for separation; and the resulting stack is wound to obtain a bare cell. The bare cell is placed in an outer package, an electrolyte (a volume ratio of ethylene carbonate EC, dimethyl carbonate DMC, and diethyl carbonate DEC in the electrolyte is 1:1:1, mass of FEC accounts for 10% of total mass of the electrolyte, and a concentration of LiPF₆ is 1 mol/L) is injected, and the package is sealed, followed by processes of formation, degassing, and trimming, to obtain an electrochemical apparatus.

To better illustrate the technical solutions of this application, some specific examples and comparative examples are listed below to better illustrate this application. Herein, a lithium-ion battery is used as an example.

### Example 1

### Preparation of lithium-ion battery

Step (1): 500 g of SiOₓ (0.5 < x < 1.6) and 500 g of carbon nanotube (CNT) slurry (with a solid percentage of 1%) were added into an MSK-SFM-10 vacuum stirrer and then stirred for 180 min at a revolution speed of 10 r/min to 40 r/min.

Step (2): The slurry in step (1) was transferred to a centrifugal rotary disc nozzle of a spray drying granulator, with a centrifugal rotation speed of 5000 r/min, and tiny droplets were formed. The spray drying granulator had an inlet temperature of 260°C and an outlet temperature of 105°C. After cooling, powder was collected.

Step (3): The powder in step (2) was sieved using a sieve of 1000 meshes to 8000 meshes, to obtain powder with Dᵥ50 of 5.0 µm.

Step (4): 500 g of the powder sieved in step (3) was added into 1000 mL of an ethanol solution, then 30 g of isopropyl titanate was added, stirring and dispersing were then performed for 30 min at a rotation speed of 800 r/min, and 10 mL of deionized water was then added, followed by stirring for 30 min, filtering, and washing with ethanol solution, to obtain powder.

Step (5): The powder in step 4 was roasted in an inert atmosphere N₂ with a controlled temperature rise rate of 5°C/min, and maintained at 400°C for 2 h. Then, the obtained powder was graded and sieved to obtain a required negative electrode material.

Step (6): 2.8 kg of the negative electrode material prepared in step (5) and 35 g of a conductive agent were added into the MSK-SFM-10 vacuum stirrer and then stirred for 40 min at a revolution speed of 10 r/min to 30 r/min.

Step (7): 95 g of a binder was added into the mixture stirred in step (6), stirring was performed for 60 min for uniform dispersion, deionized water was then added, and stirring was performed for 120 min for uniform dispersion, to obtain a mixed slurry. A revolution speed was 10 r/min to 30 r/min, and a rotation speed was 1000 r/min to 1500 r/min.

Step (8): The slurry in step (7) was filtered with a 170-mesh double-layer sieve to obtain a negative electrode slurry, and the negative electrode slurry was then applied onto a Cu foil, followed by drying and cold pressing to obtain a negative electrode plate.

Step (9): A positive electrode material LiCoO₂, conductive carbon black, and polyvinylidene fluoride (PVDF) were fully stirred and mixed to uniformity in an N-methylpyrrolidone solvent at a weight ratio of 96.7:1.7:1.6, and the resulting mixture was applied onto an Al foil, followed by drying and cold pressing to obtain a positive electrode plate. A PE porous polymer film was used as a separator. The positive electrode plate, the separator, and the negative electrode plate were stacked in sequence, so that the separator was located between the positive electrode plate and the negative electrode plate for separation, and the resulting stack was wound to obtain a bare cell. The bare cell was placed in an outer package, a prepared electrolyte (a volume ratio of EC:DMC:DEC was 1:1:1, a mass percentage of FEC in the electrolyte was 10%, and a concentration of LiPF₆ was 1 mol/L) was injected, and the package was sealed, followed by processes such as formation, degassing, and trimming to obtain a lithium-ion battery.

### Example 2

Example 2 was the same as Example 1 except that mass of CNT in step (1) was 250 g.

### Example 3

Example 3 was the same as Example 1 except that mass of CNT in step (1) was 1500 g.

### Example 4

Example 4 was the same as Example 1 except that mass of CNT in step (1) was 2500 g.

### Example 5

Example 5 was the same as Example 1 except that mass of CNT in step (1) was 5000 g.

### Example 6

Example 6 was the same as Example 3 except that the amount of isopropyl titanate added in step (4) was 60 g.

### Example 7

Example 7 was the same as Example 3 except that the amount of isopropyl titanate added in step (4) was 90 g.

### Example 8

Example 8 was the same as Example 3 except that isopropyl titanate in step (4) was changed to tetrabutyl titanate and that the amount of tetrabutyl titanate added was 35.5 g.

### Example 9

Example 9 was the same as Example 3 except that isopropyl titanate in step (4) was changed to ethyl titanate and that the amount of ethyl titanate added was 24 g.

### Comparative Example 1

Neither a titanium source nor carbon nanotubes were added in Comparative Example 1. The lithium-ion battery in Comparative Example 1 was prepared as follows.

Step (1): 2.8 kg of SiOₓ (0.5 < x < 1.6) and 35 g of a conductive agent were added into an MSK-SFM-10 vacuum stirrer and then stirred for 40 min at a revolution speed of 10 r/min to 30 r/min.

Step (2): 95 g of a binder was added into the mixture stirred in step (1), stirring was performed for 60 min for uniform dispersion, deionized water was then added, and stirring was performed for 120 min for uniform dispersion, to obtain a mixed slurry. A revolution speed was 10 r/min to 30 r/min, and a rotation speed was 1000 r/min to 1500 r/min.

Step (3): The slurry in step (2) was filtered with a 170-mesh double-layer sieve to obtain a negative electrode slurry, and the negative electrode slurry was then applied onto a Cu foil, followed by drying and cold pressing to obtain a negative electrode plate.

Step (4): A positive electrode material LiCoO₂, conductive carbon black, and polyvinylidene fluoride (PVDF) were fully stirred and mixed to uniformity in an N-methylpyrrolidone solvent at a weight ratio of 96.7:1.7:1.6, and the resulting mixture was applied onto an Al foil, followed by drying and cold pressing to obtain a positive electrode plate. A PE porous polymer film was used as a separator. The positive electrode plate, the separator, and the negative electrode plate were stacked in sequence, so that the separator was located between the positive electrode plate and the negative electrode plate for separation, and the resulting stack was wound to obtain a bare cell. The bare cell is placed in an outer package, a prepared electrolyte (a volume ratio of EC:DMC:DEC was 1:1:1, a mass percentage of FEC in the electrolyte was 10%, and a concentration of LiPF₆ was 1 mol/L) was injected, and the package was sealed, followed by processes such as formation, degassing, and trimming to obtain a lithium-ion battery.

### Comparative Example 2

Comparative Example 2 was the same as Example 3 except that the step of adding a titanium source in Example 3 was removed.

### Preparation of lithium-ion battery in Comparative Example 2

Step (1): 500 g of SiOₓ (0.5 < x < 1.6) and 1500 g of CNT slurry (with a solid percentage of 1%) were added into an MSK-SFM-10 vacuum stirrer and then stirred for 180 min at a revolution speed of 10 r/min to 40 r/min.

Step (2): The slurry in step (1) was transferred to a centrifugal rotary disc nozzle of a spray drying granulator, with a centrifugal rotation speed of 5000 r/min, and tiny droplets were formed. The spray drying granulator had an inlet temperature of 260°C and an outlet temperature of 105°C. After cooling, powder was collected.

Step (3): The powder in step (2) was sieved using a sieve of 1000 meshes to 8000 meshes, to obtain powder with Dᵥ50 of 5.0 µm.

Step (4): The powder in step 3 was roasted in an inert atmosphere N₂ with a controlled temperature rise rate of 5°C/min, and maintained at 400°C for 2 h. Then, the obtained powder was graded and sieved to obtain a required negative electrode material.

Step (5): 2.8 kg of the negative electrode material prepared in step (4) and 35 g of a conductive agent were added into the MSK-SFM-10 vacuum stirrer and then stirred for 40 min at a revolution speed of 10 r/min to 30 r/min.

Step (6): 95 g of a binder was added into the mixture stirred in step (5), stirring was performed for 60 min for uniform dispersion, deionized water was then added, and stirring was performed for 120 min for uniform dispersion, to obtain a mixed slurry. A revolution speed was 10 r/min to 30 r/min, and a rotation speed was 1000 r/min to 1500 r/min.

Step (7): The slurry in step (8) was filtered with a 170-mesh double-layer sieve to obtain a negative electrode slurry, and the negative electrode slurry was then applied onto a Cu foil, followed by drying and cold pressing to obtain a negative electrode plate.

Step (8): A positive electrode material LiCoO₂, conductive carbon black, and polyvinylidene fluoride (PVDF) were fully stirred and mixed to uniformity in an N-methylpyrrolidone solvent at a weight ratio of 96.7:1.7:1.6, and the resulting mixture was applied onto an Al foil, followed by drying and cold pressing to obtain a positive electrode plate. A PE porous polymer film was used as a separator. The positive electrode plate, the separator, and the negative electrode plate were stacked in sequence, so that the separator was located between the positive electrode plate and the negative electrode plate for separation, and the resulting stack was wound to obtain a bare cell. The bare cell was placed in an outer package, a prepared electrolyte (a volume ratio of EC:DMC:DEC was 1:1:1, a mass percentage of FEC in the electrolyte was 10%, and a concentration of LiPF₆ was 1 mol/L) was injected, and the package was sealed, followed by processes such as formation, degassing, and trimming to obtain a lithium-ion battery.

### Comparative Example 3

Comparative Example 3 was the same as Example 3 except that the step of adding CNT in Example 3 was removed.

### Preparation of lithium-ion battery in Comparative Example 3

Step (1): 500 g of SiOₓ was added into 1000 mL of an ethanol solution, then 30 g of isopropyl titanate was added into the ethanol solution, stirring and dispersing were then performed for 30 min at a rotation speed of 800 r/min, and 10 mL of deionized water was then added, followed by stirring for 30 min, filtering and washing with ethanol solution to obtain powder.

Step (2): The powder in step 1 was roasted in an inert atmosphere N₂ with a controlled temperature rise rate of 5°C/min, and maintained at 400°C for 2 h. Then, the obtained powder was graded and sieved to obtain a required negative electrode material.

Step (3): 2.8 kg of the negative electrode material prepared in step (2) and 35 g of a conductive agent were added into an MSK-SFM-10 vacuum stirrer and then stirred for 40 min at a revolution speed of 10 r/min to 30 r/min.

Step (4): 95 g of a binder was added into the mixture stirred in step (3), stirring was performed for 60 min for uniform dispersion, deionized water was then added, and stirring was performed for 120 min for uniform dispersion, to obtain a mixed slurry. A revolution speed was 10 r/min to 30 r/min, and a rotation speed was 1000 r/min to 1500 r/min.

Step (5): The mixed slurry in step (4) was filtered with a 170-mesh double-layer sieve to obtain a negative electrode slurry, and the negative electrode slurry was then applied onto a Cu foil, followed by drying and cold pressing to obtain a negative electrode plate.

Step (6): A positive electrode material LiCoO₂, conductive carbon black, and polyvinylidene fluoride (PVDF) were fully stirred and mixed to uniformity in an N-methylpyrrolidone solvent at a weight ratio of 96.7:1.7:1.6, and the resulting mixture was applied onto an Al foil, followed by drying and cold pressing to obtain a positive electrode plate. A PE porous polymer film was used as a separator. The positive electrode plate, the separator, and the negative electrode plate were stacked in sequence, so that the separator was located between the positive electrode plate and the negative electrode plate for separation, and the resulting stack was wound to obtain a bare cell. The bare cell was placed in an outer package, a prepared electrolyte (a volume ratio of EC:DMC:DEC was 1:1:1, a mass percentage of FEC in the electrolyte was 10%, and a concentration of LiPF₆ was 1 mol/L) was injected, and the package was sealed, followed by processes such as formation, degassing, and trimming to obtain a lithium-ion battery.

### Comparative Example 4

Comparative Example 4 was the same as Example 3 except that the step of adding CNT and the step of adding a titanium source in Example 3 were removed and that a step of coating surface of SiOₓ with alkyne carbon was added.

### Preparation of lithium-ion battery in Comparative Example 4

Step (1): 500 g of SiOₓ (0.5 < x < 1.6) was added in a CVD furnace, acetylene gas was filled, a temperature was controlled at 750°C, a gas flow rate was maintained at 200 mL/min for 2 h, and a coating percentage of carbon was about 1%.

Step (2): The powder in step (1) was sieved using a sieve of 1000 meshes to 8000 meshes, to obtain powder with Dᵥ50 of 5.0 µm.

Step (3): 2.8 kg of the negative electrode material prepared in step (2) and 35 g of a conductive agent were added into an MSK-SFM-10 vacuum stirrer and then stirred for 40 min at a revolution speed of 10 r/min to 30 r/min.

Step (4): 95 g of a binder was added into the mixture stirred in step (3), stirring was performed for 60 min for uniform dispersion, deionized water was then added, and stirring was performed for 120 min for uniform dispersion, to obtain a mixed slurry. A revolution speed was 10 r/min to 30 r/min, and a rotation speed was 1000 r/min to 1500 r/min.

Step (5): The mixed slurry in step (4) was filtered with a 170-mesh double-layer sieve to obtain a negative electrode slurry, and the negative electrode slurry was then applied onto a Cu foil, followed by drying and cold pressing to obtain a negative electrode plate.

Step (6): A positive electrode material LiCoO₂, conductive carbon black, and polyvinylidene fluoride (PVDF) were fully stirred and mixed to uniformity in an N-methylpyrrolidone solvent at a weight ratio of 96.7:1.7:1.6, and the resulting mixture was applied onto an Al foil, followed by drying and cold pressing to obtain a positive electrode plate. A PE porous polymer film was used as a separator. The positive electrode plate, the separator, and the negative electrode plate were stacked in sequence, so that the separator was located between the positive electrode plate and the negative electrode plate for separation, and the resulting stack was wound to obtain a bare cell. The bare cell was placed in an outer package, a prepared electrolyte (a volume ratio of EC:DMC:DEC was 1:1:1, a mass percentage of FEC in the electrolyte was 10%, and a concentration of LiPF₆ was 1 mol/L) was injected, and the package was sealed, followed by processes such as formation, degassing, and trimming to obtain a lithium-ion battery.

### Comparative Example 5

Comparative Example 5 was the same as Comparative Example 3 except that EC was replaced with propylene carbonate PC in the electrolyte, the volume ratio of PC:DMC:DEC in the electrolyte used in Comparative Example 5 was 1:1:1, the mass percentage of FEC in the electrolyte was 10%, and the concentration of LiPF₆ was 1 mol/L.

### Comparative Example 6

Comparative Example 6 was the same as Comparative Example 3 except that the percentage by volume of EC in the electrolyte was increased, the volume ratio of EC:DMC:DEC in the electrolyte used in Comparative Example 6 was 1.5:1:1, the mass percentage of FEC in the electrolyte was 10%, and the concentration of LiPF₆ was 1 mol/L.

The following describes methods for testing various parameters in this application.

SEM (scanning electron microscopy) test: Scanning electron microscope characterization was recorded with a PhilipsXL-30 field emission scanning electron microscope. Testing was performed under the conditions of 10 kV and 10 mA.

Carbon percentage test: A sample was heated and burned in a high-frequency furnace at a high temperature under oxygen-enriched conditions, such that carbon and sulfur were oxidized into carbon dioxide and sulfur dioxide, respectively; and after treatment, these gases were caused to enter corresponding absorption tanks, so as to absorb corresponding infrared radiation, which in turn were converted into corresponding signals by a detector. The signals were sampled by a computer, linearly corrected, and converted into numerical values which were proportional to concentrations of the carbon dioxide and the sulfur dioxide. Then values taken during the entire analysis process were accumulated. After the analysis was completed, in the computer, this accumulated value was divided by the weight value, then multiplied by a correction factor, and subtracted by a blank value, to obtain percentages of carbon and sulfur in the sample. Sample test was performed using a high-frequency infrared carbon and sulfur analyzer (Shanghai Dekai HCS-140).

Powder conductivity: This test was performed using a resistivity tester (Suzhou Jingge Electronics ST-2255A). 5 g of powder sample was taken and pressed at a constant pressure of 5000 kg ± 2 kg for 15s to 25s with an electronic pressing machine; the sample was then placed between the electrodes of the tester with a sample height of h (cm), a voltage between two terminals of U, a current of I, and a resistance of R (KS2). The area S of the powder-pressed sheet was 3.14 cm², and the powder electronic conductivity δ was calculated according to the formula electronic conductivity δ = hIeS × R)/1000, in S/m.

Specific surface area test: At a constant low temperature, the amounts of gas adsorbed by the surface of a solid under different relative pressures were measured, and then an adsorption amount of a monomolecular layer of the sample was found based on the Brunauer-Emmett-Teller adsorption theory and its equation (BET formula), to calculate a specific surface area of the solid.

Particle size test: About 0.02 g of sample powder was added into a 50 mL clean beaker, and 20 mL of deionized water was added into the breaker, with a few drops of surfactant (1%) added to make the powder completely dispersed in the water. Then, the powder was subjected to ultrasound for 5 min in a 120 W ultrasonic cleaning machine, and particle size distribution was tested with a MasterSizer 2000.

Test for resistivity of negative electrode plate: Resistance of a negative electrode plate was tested using the four-probe method. An instrument used for the four-probe method test was a precision direct current voltage and current source (type SB 118). Four copper plates with a size of 1.5 cm x 1 cm x 2 mm were fixed in a line at equal distances. A distance between two copper plates in the middle was L (1 cm to 2 cm). A substrate where to fix the copper plates was an insulating material. During the test, lower end surfaces of four copper plates were pressed on the negative electrode plate under test (under the pressure of 3000 Kg) for 60s. Copper plates on two ends were applied with direct current I. A voltage V was measured between the two copper plates in the middle. Three I values and three V values were acquired, and average values Ia and Va of I and V were taken respectively. The value of Va/Ia was the resistance of the negative electrode plate at the test point, and a ratio of the resistance to the thickness of the negative electrode plate was the resistivity of the electrode plate. Testing was performed at 12 points for each negative electrode plate, and the average value was calculated.

Cycling test: At a test temperature of 25°C, a battery was charged to 4.45 V at a constant current of 0.5C, constant-voltage charged to 0.025C, left standing for 5 minutes, and then discharged to 3.0 V at 0.5C. A capacity obtained in this step was an initial capacity C0. Then, a 0.5C charge/0.5C discharge cycle test was performed. A capacity C1 after 500 cycles was recorded.

Capacity retention rate after 500 cycles at 45°C = C1/C0 × 100%.

Rate performance: At a test temperature of 25°C, the battery was charged to 4.45 V at a constant current of 0.5C, constant-voltage charged to a current of not greater than 0.025C, left standing for 5 minutes, and then discharged to 3.0 V at 0.2C. The capacity obtained in this step was a discharge capacity at 0.2C. Then, the battery was charged to 4.45 V at a constant current of 0.5C, constant-voltage charged to a current of not greater than 0.025C, left standing for 5 minutes, and then discharged to 3.0 V at 2C. The capacity obtained in this step was a discharge capacity at 2C. A ratio of the discharge capacity at 2C to the discharge capacity at 0.2C was used for characterizing the rate performance.

Test for cycling swelling rate of lithium-ion battery: A thickness d0 of the lithium-ion battery at initial 50% SOC was measured with a spiral micrometer. At the 500th cycle, the lithium-ion battery was in a 100% SOC state, and then a thickness d1 of the lithium-ion battery at that time was measured with the spiral micrometer. Swelling rate after 500 cycles at 45°C = (d1 - d0)/d0 × 100%.

Low-temperature performance of lithium-ion battery: A capacity obtained after the lithium-ion battery was discharged to 3.0 V at 0.2C at 25°C is C0, a capacity C1 obtained after the lithium-ion battery was discharged to 3.0 V at 0.2C was tested at a temperature of -20°C, and a capacity retention rate at -20°C was C1/C0.

The performance test results of Examples 1 to 9 and Comparative Examples 1 to 4 are shown in Table 1.

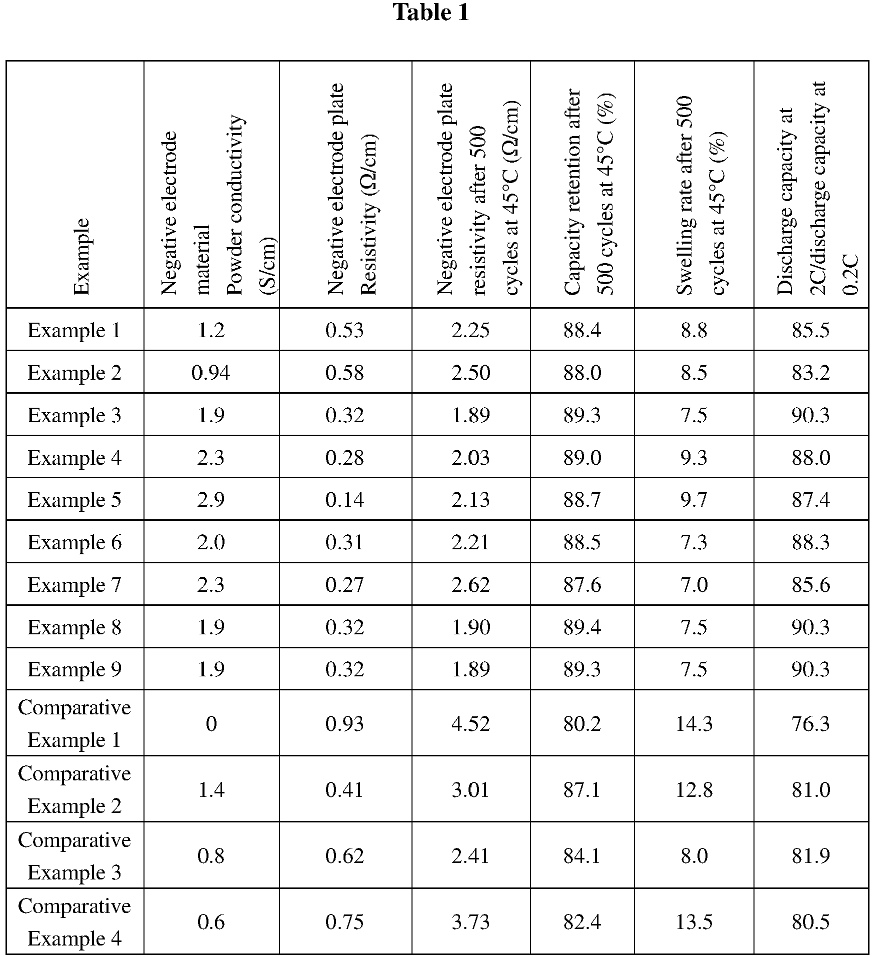

From comparison between data of Examples 1 to 9 and data of Comparative Example 1, it can be learned that compared with Comparative Example 1 in which neither the carbon nanotubes nor the titanium oxide layer is added into the negative electrode material, Examples 1 to 9 have higher negative electrode material powder conductivity, lower negative electrode plate resistivity, lower negative electrode plate resistivity after 500 cycles at 45°C, higher capacity retention rate after 500 cycles at 45°C, smaller swelling rate after 500 cycles at 45°C, and better rate performance. This indicates that loading the carbon nanotubes and applying the titanium oxide layer on the surface of SiOₓ can increase the conductivity of the negative electrode material, improve the cycling performance and rate performance of the electrochemical apparatus, and decrease the cycling swelling rate.

It can be learned from comparison between Examples 1 to 5 that as the mass ratio of CNT to SiOₓ in the negative electrode material increases from 0.05% to 1%, the capacity of the lithium-ion battery after 500 cycles at 45°C increases first and then decreases. This may be because CNT can improve the electrical conductivity of the negative electrode material, the cycling performance of the lithium-ion battery is gradually improved with the increase in the amount of CNT, but when the amount of CNT is too large, the amount of the dispersing agent in CNT slurry attached to the surface of SiOₓ increases, limiting transmission of lithium ions. Therefore, the mass ratio of the carbon nanotubes to the silicon-oxygen compound is optionally 0.05% to 1%.

It can be learned from comparison between Example 3, Example 6, and Example 7 that as the amount of TiO₂ in the negative electrode material increases, the swelling rate after 500 cycles at 45°C of the lithium-ion battery gradually decreases, but the capacity retention rate after 500 cycles at 45°C and rate performance of the lithium-ion battery also decrease. This may be because TiO₂ has good mechanical properties and can suppress swelling of the silicon-oxygen compound during cycling. However, as the amount of TiO₂ increases, the TiO₂ layer on the surface of the silicon-oxygen compound becomes thicker and covers CNT, which weakens long-range electrical conductivity during cycling, and results in degraded cycling performance and rate performance. Therefore, in some embodiments, the mass ratio of element titanium in the titanium oxide layer to the silicon-oxygen compound is 1% to 3%.

It can be learned from comparison between Example 3, Example 8, and Example 9 that when different titanium sources are selected, the performances of the negative electrode material and the lithium-ion battery also remain essentially the same, as long as the final mass ratio of Ti to SiOₓ is controlled to remain the same.

It can be learned from Comparative Example 1 and Comparative Example 2 that when the negative electrode material has only CNT but no TiO₂, the cycling capacity retention rate of the lithium-ion battery can be significantly increased. This is because CNT can significantly improve the electrical conductivity of SiOₓ, which facilitates extractable capacity of SiOₓ during cycling, but the reduction in cycling swelling rate is small.

It can be learned from Comparative Example 1 and Comparative Example 3 that when the negative electrode material has only TiO₂ coating but no CNT, the swelling rate of the lithium-ion battery during cycling can be significantly decreased. However, because the negative electrode material has insufficient electrical conductivity, the cycling capacity retention rate is low.

It can be learned from Example 3, Comparative Example 2, and Comparative Example 3 that composite treatment performed on the surface of SiOₓ by using CNT and TiO₂ can improve both the cycling performance and rate performance of the lithium-ion battery and reduce cycling swelling. This may be because CNT enhances the electrical conductivity of the negative electrode material and TiO₂ improves the mechanical properties of the negative electrode material. In addition, the presence of Ti-O-Si bonds allows CNT to be firmly attached to the surface of the material, guaranteeing the electrical conductivity of the negative electrode material during long-term cycling.

It can be learned from Comparative Example 1, Comparative Example 3, and Comparative Example 4 that as compared with Comparative Example 1, coating the surface of SiOₓ with alkyne in Comparative Example 4 can improve the initial electrical conductivity of the material. However, compared with Comparative Example 3, Comparative Example 4 has lower capacity retention rate after 500 cycles at 45°C, higher swelling rate after 500 cycles at 45°C, and lower rate performance, meaning that alkyne is inferior to CNT in improving cycling performance. This may be because in Comparative Example 4, as the negative electrode material swells during cycling, contact between particles of the negative electrode material becomes poorer, limiting transmissions of electrons and ions in the negative electrode material.

The performance test results of Example 3, Comparative Example 5, and Comparative Example 6 are shown in Table 2.

**Table 2**

| Example | Negative electrode material powder conductivity (S/cm) | Negative electrode plate resistivity (Ω/cm) | Capacity retention rate after 500 cycles at 45°C (%) | Capacity retention rate at -20°C |
|---|---|---|---|---|
| Example 3 | 1.9 | 0.32 | 89.3% | 81% |
| Comparative Example 5 | 1.9 | 0.32 | 72% | 80% |
| Comparative Example 6 | 1.9 | 0.32 | 88.3% | 72% |

The example and comparative examples shown in Table 2 show how the percentage of EC in the electrolyte affects the capacity retention rate and low-temperature performance of the lithium-ion battery. The electrolyte in Example 3 contains 33.3% by volume of EC, the electrolyte in Comparative Example 5 contains no EC but contains 33.3% by volume of PC, and the electrolyte in Comparative Example 6 contains 42.86% by volume of EC. It can be learned from comparison between Example 3, Comparative Example 5, and Comparative Example 6 that the cycling performance of Example 3 is better than that of Comparative Example 5 and Comparative Example 6. Therefore, in the lithium-ion battery using the silicon-based material as the negative electrode material, the electrolyte used preferably contains EC, and EC accounts for 4% to 35% of the volume of the organic solvent. This is because ethylene carbonate (EC) in the electrolyte as a solvent composition has a high dielectric constant and its main decomposition product is ROCO₂Li, which can form an effective, dense, and stable SEI film on the surface of the negative electrode material. The percentage of EC being within a range of 4% to 35% can significantly improve the capacity retention rate and low-temperature performance of the electrochemical apparatus. However, when EC is replaced with PC, due to the presence of graphite in the negative electrode material, PC is likely to cause graphite to peel off, thereby leading to decrease in cycle capacity retention rate. When the percentage of EC is higher than 35%, due to high viscosity of EC, too much EC leads to high viscosity of the entire electrolyte, degrading the low-temperature performance of the lithium-ion battery.

To sum up, the surface of SiOₓ being coated with CNT and TiO₂ can improve the cycling performance and rate performance and decrease the cycling swelling rate. When the volume ratio of EC, DMC, and DEC in the electrolyte is (0.1 to 1):1:1, the mass of FEC accounts for 10% of the total mass of the electrolyte, and the concentration of LiPF₆ in the electrolyte is 1 mol/L, the performance of the electrochemical apparatus is better.

Although the subject matter has been described in a language specific to structural features and/or logical actions of a method, it should be understood that the subject matter defined in the appended claims is not necessarily limited to the specific features or actions described above. On the contrary, the specific features and actions described above are merely exemplary forms for implementing the claims.

## Claims

1. A negative electrode material, comprising:
a silicon-based material; or a silicon-based material and graphite;
wherein the silicon-based material comprises a silicon-oxygen compound, carbon nanotubes, and a titanium oxide layer, the carbon nanotubes and the titanium oxide layer being located on surface of the silicon-oxygen compound, and at least some of the carbon nanotubes running through the titanium oxide layer.

2. The negative electrode material according to claim 1, wherein
mass of the carbon nanotubes is m1, mass of the silicon-oxygen compound is m2, and r1 = m1/m2, r1 being 0.05% to 1%; and/or
mass of element titanium in the titanium oxide layer is m3, mass of the silicon-oxygen compound is m2, and r2 = m3/m2, r2 being 1% to 3%.

3. The negative electrode material according to claim 1, wherein
Dᵥ50 of the silicon-based material is 3 µm to 10 µm; and/or
the silicon-based material has a specific surface area of 1.0 m²/g to 10 m²/g.

4. The negative electrode material according to claim 1, wherein
the silicon-oxygen compound comprises SiOₓ, wherein 0.5 < x < 1.6; and
SiOₓ comprises at least one of a crystalline state or an amorphous state.

5. The negative electrode material according to claim 1, wherein
the titanium oxide layer comprises an accumulation structure formed by accumulation of spherical particles; and
the spherical particle has a diameter of 1 nm to 5 nm.

6. The negative electrode material according to claim 1, wherein
the negative electrode material has a conductivity of 2.0 S/cm to 30 S/cm.

7. The negative electrode material according to claim 1, wherein
the graphite comprises at least one of natural graphite, artificial graphite, or meso-carbon microbeads.

8. An electrochemical apparatus, comprising:
a positive electrode plate, a negative electrode plate, and a separator disposed between the positive electrode plate and the negative electrode plate, wherein
the negative electrode plate comprises a negative electrode current collector and a negative electrode active substance layer disposed on the negative electrode current collector, the negative electrode active substance layer comprising the negative electrode material according to any one of claims 1 to 7.

9. The electrochemical apparatus according to claim 8, wherein the electrochemical apparatus further comprises an electrolyte; and the electrolyte contains fluoroethylene carbonate, and based on a total mass of the electrolyte, a mass percentage of fluoroethylene carbonate is 4% to 25%.

10. An electronic apparatus, comprising the electrochemical apparatus according to claim 8 or 9.
